# EUROPÄISCHE PATENTANMELDUNG

(11) **EP 3 835 238 A1**
(43) Veröffentlichungstag der Anmeldung: **16.06.2021**
(21) Anmeldenummer: 19214399.8
(22) Anmeldetag: 09.12.2019
(51) Int. Cl.: B65G 17/34, B65G 47/84, B65G 47/96

(54) **FÖRDERVORRICHTUNG UND VERFAHREN ZUM STABILISIERTEN FÖRDERN VON STÜCKGÜTERN**

(71) Anmelder: Siemens Aktiengesellschaft, 80333 München (DE)
(72) Erfinder: ASCHPURWIS, Carsten, 78464 Konstanz (DE)
(74) Vertreter: Siemens Patent Attorneys

(57) **Zusammenfassung**

Das Verhindern unerwünschter lateraler Bewegungen von Stückgütern (4) auf Fördervorrichtungen (2) hat große Bedeutung um Herabfallen der Stückgüter (4) von der Fördervorrichtung (2) und fehlerhaftes Routing zu vermeiden. Die Erfindung offenbart ein Verfahren und eine Fördervorrichtung (2) für Stückgüter (4). Das zu transportierende Stückgut liegt auf eine Auflagefläche (10) aus längs einer Flussrichtung (6) laufenden Segmente (8), wobei die Segmente (8) entlang der Flussrichtung (6) aufeinanderfolgend angeordnet sind. Entlang der Flussrichtung (6) mit den Segmenten (8) laufende, von der Fördervorrichtung (2) umfasste Manipulationselemente (12), die mit einer Bewegungskomponente quer zur Flussrichtung (6) ansteuerbar bewegbar sind. Eine Steuereinrichtung steuert die Manipulationselemente (12) individuell so an, dass das auf der Auflagefläche (10) aufliegende Stückgut (4) während seines Transports entlang der Flussrichtung (6) seitlich stabilisiert wird und/oder eine Bewegung des Stückguts (4) mit einer Bewegungskomponente quer zur Flussrichtung (6) nicht verhindert wird.

## Beschreibung

Die vorliegende Erfindung betrifft das technische Gebiet einer Fördervorrichtung für Stückgüter.

Im Bereich der Post- und Paketsortierung gab es im Mixed-Mail-Bereich in den letzten Jahren eine starke Zunahme von Sendungen stark unterschiedlicher Größe, denn bedingt durch die Zunahme des automatisierten Versands gibt es immer weniger Konsolidierung versendeter Güter. Häufig sind diese Güter mangelhaft verpackt (beweglicher Schwerpunkt innerhalb der Verpackung, empfindliches Verpackungsmaterial, ...), so dass ein ständiges Hin- und Herschieben die Gefahr von Beschädigung des Stückguts, seiner Verpackung und der Fördervorrichtung erhöht. Durch die starke Zunahme des Paketvolumens aufgrund des Versandhandels ist diese Problematik von hoher Bedeutung für die Effizienz und Zuverlässigkeit der gesamten Versandkette.

Je kleiner und leichter Stückgüter sind, umso empfindlicher reagieren sie auf bei Ausschleusungen auf Endstellen und bei Kurvenfahrten auftretende Richtungs- und Beschleunigungsänderungen. Kleinere und unregelmäßige Stückgüter rollen besonders leicht und haben häufig einen verschieblichen Schwerpunkt, was die Problematik eines unkontrollierten Verschiebens während des Transports, insbesondere während des Ausschleusens, verstärkt. Auch Stückgüter, die auf einem Sorter liegend transportiert werden, können bedingt durch ihre Form leicht vom Sorter rollen. In dem Fall gelten sie als nicht maschinenfähig ("non-conveyables"). Wenn Stückgüter ihre Position selbstständig verschieben, kann daher korrektes Routing nicht mehr garantiert werden, wodurch es beim Abschieben/Abwerfen zu Fehlern und Störungen kommen kann und Fehlsortierung resultiert. Unerwünschte laterale Bewegungen können auch dazu führen, dass Stückgüter vom Sorter fallen und dadurch den Sorter und/oder sich selbst beschädigen.

Ein unkontrolliertes Verschieben und Rutschen passiert aufgrund der stoßartigen Beschleunigung besonders leicht beim Aufschießen auf die und Abwerfen von der Hauptförderstrecke einer Fördervorrichtung. Im Paketbereich sind häufig Quergurt- oder Schuhsorter als Fördervorrichtungen im Einsatz. Diese Problematik tritt auch bei gleichartigen, gut verpackten und schweren Stückgütern und ist auch nicht nur auf Quergurt- und Schuhsorter beschränkt, sondern tritt auch bei anderen Fördervorrichtungen auf.

Es ist wünschenswert, auf Fördervorrichtungen unerwünschte laterale Bewegungen von Stückgütern zu verhindern und die Stückgüter in Position zu halten.

Stand der Technik zur Problemlösung ist Handsortierung oder Transport besonders kritischer Stückgüter in speziellen rezirkulierenden Schalen, in denen diese gegebenenfalls sogar mit einem Gummi fixiert werden. Diese Lösungen sind aufwendig und somit unwirtschaftlich.

Der vorliegenden Erfindung liegt daher die Aufgabe zugrunde, eine verbesserte Lösung der beschriebenen Problematik zu ermöglichen. Diese Aufgabe wird gelöst durch eine Fördervorrichtung mit den Merkmalen von Anspruch 1 und ein Verfahren mit den Merkmalen des Anspruchs 9.

Vorteilhafte Ausgestaltungen der Erfindung ergeben sich aus den Unteransprüchen. Diese vorteilhaften Ausgestaltungen lassen sich, sofern nicht anders ausgeführt, beliebig miteinander kombinieren. Auf die erfindungsgemäße Lösung, die Ausgestaltungsform und die mit ihnen verbundenen Vorteile wird im Folgenden eingegangen.

Die erfindungsgemäße Vorrichtungslösung sieht eine Fördervorrichtung für Stückgüter vor, umfassend längs einer Flussrichtung laufende Segmente, wobei die Segmente entlang der Flussrichtung aufeinanderfolgend angeordnet sind und eine Auflagefläche für die Stückgüter ausbilden. Die Fördervorrichtung umfasst entlang der Flussrichtung mit den Segmenten laufende Manipulationselemente, wobei die Manipulationselemente mit einer Bewegungskomponente quer zur Flussrichtung ansteuerbar bewegbar sind. Die Fördervorrichtung umfasst zudem eine Steuereinrichtung, die adaptiert ist, die Manipulationselemente so anzusteuern, dass das auf der Auflagefläche aufliegende Stückgut während seines Transports entlang der Flussrichtung seitlich stabilisiert wird.

Hinsichtlich eines Verfahrens wird die vorstehend genannte Aufgabe gelöst durch ein Verfahren zum Fördern eines Stückguts auf einer Fördervorrichtung. Die Fördervorrichtung umfasst Segmente und Manipulationselemente, die beide gemeinsam längs einer Flussrichtung laufen. Das Verfahren umfasst die Verfahrensschritte:
a) Transport des Stückguts entlang der Flussrichtung, wobei das Stückgut aufliegt auf einer Auflagefläche, die von längs der Flussrichtung laufenden Segmenten ausgebildet wird.
b) Individuelles Ansteuern der Manipulationselemente mit einer Bewegungskomponente quer zur Flussrichtung hin zu und/oder weg von dem Stückgut, so dass das Stückgut während seines Transports entlang der Flussrichtung seitlich stabilisiert wird und/oder eine Bewegung des Stückguts mit einer Bewegungskomponente quer zur Flussrichtung nicht verhindert wird.

Die Flussrichtung entspricht einer Hauptförderrichtung der Fördervorrichtung. So können die parallel zur Flussrichtung liegenden Seiten eines Hauptförderflusses der Fördervorrichtung intuitiv als Uferseiten bezeichnet werden.

Technisch einfach kann das Laufen der Segmente und der Manipulationselemente entlang der Flussrichtung realisiert werden, wenn die Fördervorrichtung Obertrum und Untertrum aufweist und sowohl die Segmente, als auch die Manipulationselemente gemeinsam mit dem Trum laufen. Die resultierende Bewegung eines von den Segmenten und/oder den Manipulationselementen beeinflussten Stückguts setzt sich zusammen aus seinen resultierenden Bewegungskomponente quer und entlang zur Flussrichtung, wobei je nach Ansteuerung beide Bewegungskomponente die dominierenden oder einzigen Bewegungskomponenten des Stückguts sein können.

Unter der Bewegungskomponente quer zur Flussrichtung wird eine Bewegung von der ersten zur zweiten Uferseite verstanden, wobei unter einer Bewegung eines Manipulationselements mit einer Bewegungskomponente quer zur Flussrichtung eine Bewegung verstanden wird, die auch Bewegungskomponenten entlang der Flussrichtung aufweisen kann aber nicht muss. Die Bewegung des Stückguts wird sowohl von der Bewegung der Manipulationselemente, als auch von der Bewegung der Segmente beeinflusst.

Unter seitlichem Stabilisieren soll sowohl ein tatsächliches, aktives Stabilisieren, bei welchem sich Manipulationselement(e) und Stückgut während des Transports des Stückguts entlang der Flussrichtung berühren, als auch ein passives Stabilisieren verstanden werden, bei welchem eine Berührung von Manipulationselement(en) und Stückgut nur im Anschluss an eine unerwünschte seitliche Bewegung des Stückguts stattfindet. Bei einem passiven Stabilisieren verhindern die Manipulationselemente beispielsweise ein Herabfallen des Stückguts von der Auflagefläche.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform können die Manipulationselemente mit einer Bewegungskomponente quer zur Flussrichtung hin- und her ansteuerbar bewegbar und absenkbar sein auf Höhe der und/oder unter die Auflagefläche. Die Manipulationselemente können natürlich auch wieder derart angesteuert werden, dass sie oberhalb der Auflagefläche auftauchen.

Hinsichtlich des Verfahrens kann ein ansteuerbares Bewegen der Manipulationselemente mit einer Bewegungskomponente quer zur Flussrichtung und/oder Absenken von mindestens einem Manipulationselement auf Höhe der und/oder unter die Auflagefläche erfolgen.

Diese Funktionalität der Manipulationselemente kann mit unterschiedlichen Mechanismen gesteuert werden.

So kann eine Bewegung des Stückguts mit einer Bewegungskomponente quer zur oder entlang der Flussrichtung an mindestens einem der Manipulationselemente gestoppt oder nicht verhindert werden. Wenn ein Stückgut von der linken Uferseite her auf die als Förderfläche agierende Auflagefläche aufgeschossen werden soll, soll im Aufschussbereich kein Manipulationselement auf der linken Uferseite oberhalb der Auflagefläche angeordnet sein, da sonst ein erfolgreiches Aufschießen verhindern werden würde. Ein auf der rechten Uferseite, oberhalb der Auflagefläche angeordnetes Manipulationselement kann dann nach dem Aufschiessen die Bewegungskomponente quer zur Flussrichtung des aufgeschossenen Stückguts stoppen, so dass es nicht auf der rechten Uferseite von der Auflagefläche rutscht. Ist das Stückgut auf die Auflagefläche aufgeschossen, kann das Manipulationselement auf die linke Uferseite oberhalb der Auflagefläche hin zu dem Stückgut bewegt werden und so die seitliche Bewegung des Stückguts quer zur Flussrichtung einschränken.

Analog muss beim seitlichen Abwerfen sichergestellt werden, dass kein Manipulationselement die Bewegung des Stückguts hin zu einer Endstelle verhindert. Dies kann erreicht werden, indem das oder die Manipulationselemente, die sich auf der Abwurfseite im Abwurfbereich befinden, auf Höhe oder unterhalb der Auflagefläche abgesenkt werden.

Während des Transports des Stückguts auf der Auflagefläche aufliegend entlang der Flussrichtung können die Manipulationselemente relativ zu dem Stückgut fest eingestellt werden und so das Stückgut von einer Seite und/oder von einer ersten und zweiten Seite des Stückguts stabilisieren, so dass eine unerwünschte laterale Bewegung des Stückguts komplett verhindert oder zumindest begrenzt, also gestoppt, wird bevor das Stückgut von der Auflagefläche rutscht.

Gemäß einer Ausführungsform kann die Steuereinrichtung adaptiert sein, die Manipulationselemente so anzusteuern, dass das Stückgut während seines Transports entlang der Flussrichtung seitlich stabilisiert wird, indem die Manipulationselemente das auf der Auflagefläche aufliegende Stückgut reversibel mindestens von einer Seite stützen oder von einer ersten und zweiten Seite eingrenzen, insbesondere einklemmen, so dass eine unerwünschte Bewegung des Stückguts quer zur und/oder entlang der Flussrichtung verhindert wird.

Gemäß einer Ausführungsform kann das Stückgut seitlich stabilisiert werden, indem die Manipulationselemente das auf der Auflagefläche aufliegende Stückgut mindestens von einer Seite stützen oder von einer ersten und zweiten Seite eingrenzen, insbesondere einklemmen, so dass eine unerwünschte Bewegung des Stückguts quer zur und/oder entlang der Flussrichtung verhindert wird.

Verhindert werden können so unerwünschte Bewegungen, insbesondere Rutschen, entlang der und/oder quer zur Flussrichtung. Das Be- bzw. Eingrenzen des Stückguts kann erfolgen von der rechten und/oder linken Uferseite der Auflagefläche her (begrenzt unerwünschte Bewegungskomponenten quer zur Flussrichtung) und/oder von in Flussrichtung gesehen vor und/oder hinter (begrenzt unerwünschte Bewegungskomponenten entlang der Flussrichtung) dem Stückgut. Die Manipulationselemente werden hierzu rechts und/oder links und/oder vor und/oder hinter dem Stückgut positioniert. Das Eingrenzen kann also von ein bis vier Seiten her erfolgen, ist reversibel und kann wieder gelöst werden, beispielsweise vor dem seitlichen Abwerfen des Stückguts.

Gemäß einer Ausführungsform kann ein Manipulationselement jeweils zwischen zwei Segmenten und/oder jeweils auf einem Segment angeordnet sein. Ein auf einem Segment angeordnetes Manipulationselement kann von dem Segment umfasst sein. Das von dem Segment umfasste Manipulationselement kann fest oder individuell beweglich auf dem Segment aufliegend ausgestaltet sein.

Das auf dem Segment angeordnete Manipulationselement kann zusammen mit dem Segment oder individuell ansteuerbar bewegbar ausgestaltet sein. Das Manipulationselement kann somit individuell oder nur gemeinsam mit einer Bewegung des Segments bewegt werden.

Gemäß einer Ausführungsform können die Manipulationselemente individuell ansteuerbar ausgestaltet sein und die Steuereinrichtung adaptiert sein, die Manipulationselemente individuell anzusteuern. Die Manipulationselemente können dann unabhängig von den Segmenten angesteuert werden (betreffend Bewegung quer zur Flussrichtung und absenken bzw. auftauchen relativ zur Höhe der Auflagefläche), wobei bei individueller Ansteuerung dennoch sowohl die Manipulationselemente, als auch die Segmente der Fördervorrichtung gemeinsam längs der Flussrichtung laufen.

Gemäß einer weiteren Ausführungsform wird die Bewegung eines Manipulationselements durch Ansteuerung einer Bewegung des Segments bewirkt. Dies kann realisiert werden, indem das Manipulationselement mechanisch gekoppelt oder verbunden mit einer ansteuerbar bewegbaren Komponente des Segments ist.

Gemäß einer Ausführungsform kann die Fördervorrichtung zudem ein mit einer Bewegungskomponente quer zur Flussrichtung ansteuerbares Förderband umfassen, wobei das Förderband von einem Segment umfasst ist und/oder zwischen zwei Segmenten angeordnet ist. Wenn das Förderband von einem Segment umfasst ist, bildet es somit die Auflagefläche mit aus. Ein zwischen den Segmenten angeordnetes Förderband ist nur dem Manipulationselement zugehörig und kann separat angesteuert werden.

Gemäß einer weiteren Ausführungsform kann ein Manipulationselement nockenartig auf dem Förderband angebracht sein, so dass eine Bewegung des Förderbandes eine Bewegung des Manipulationselements bewirkt. Das Manipulationselement läuft mit dem Förderband gemeinsam in der Art einer mitlaufenden Nocke mit. So wird das Manipulationselement am Ende der Auflagefläche auf der rechten bzw. linken Uferseite gemeinsam mit dem Förderband nach unten abtauchen, so dass ein Stückgut ungehindert seitlich abgeworfen oder auf die Auflagefläche aufgeschossen werden kann.

Die Manipulationselemente können als Nocken ausgestaltet sein.

Gemäß einer weiteren Ausführungsform kann die Fördervorrichtung eine ansteuerbare Abwurfvorrichtung umfassen, die ausgestaltet ist, ein auf der Auflagefläche aufliegendes Stückgut mit einer Bewegungskomponente quer zur Flussrichtung seitlich abzuwerfen. Das seitliche Abwerfen des Stückguts erfolgt entlang einer Abwurfrichtung, die mindestens eine Bewegungskomponente quer zur Flussrichtung aufweist, typischerweise hin zu einer Endstelle. Die Abwurfrichtung ist in einem Winkel zur Flussrichtung angeordnet. Die Abwurfvorrichtung kann individuell ansteuerbar ausgestaltet sein und die Steuereinrichtung adaptiert sein zur individuellen Ansteuerung der Abwurfvorrichtung.

Gemäß einer weiteren Ausführungsform können ein oder mehrere der Förderbänder und/oder ein oder mehrere der Manipulationselemente ausgestaltet sein, individuell und/oder gemeinsam als Abwurfvorrichtung zu agieren. Wenn nur die Förderbänder als Abwurfvorrichtung agieren, muss vor dem Abwerfen selbstverständlich eine Positionierung der Manipulationselemente derart erfolgen, dass das Abwerfen nicht be- oder sogar verhindert wird. Diese Positionierung kann durch Abtauchen der Manipulationsseite auf der Abwurfseite auf Höhe oder unterhalb der Auflagefläche realisiert werden. Eine andere Option ist eine Positionierung auf der der Abwurfseite gegenüberliegenden Seite der Auflagefläche.

Gemäß einer Ausführungsform kann ein Bewegen eines oder mehrerer Förderbänder und/oder eines oder mehrerer Manipulationselemente mit einer Bewegungskomponente quer zur Flussrichtung erfolgen, um das seitliche Abwerfen des Stückguts zu erzielen, wobei das eine oder die mehreren Förderbänder von einem Segment umfasst sein können und/oder zwischen zwei Segmenten angeordnet sein können. Somit kann das seitliche Abwerfen durchgeführt werden von einem von dem Segment umfassten, mit einer Bewegungskomponente quer zur Flussrichtung ansteuerbaren Förderband und/oder durch die Manipulationselemente. Ein Manipulationselement, dass das Abwerfen durchführt, schiebt das Stückgut seitlich von der Auflagefläche. Zusätzlich oder alleine bewegt das Förderband, auf welchen das abzuwerfende Stückgut aufliegt, das Stückgut.

Gemäß einer Ausführungsform kann die Abwurfvorrichtung individuell ansteuerbar ausgestaltet sein und die Steuereinrichtung kann adaptiert sein, die Abwurfvorrichtung individuell anzusteuern.

Um eine besonders einfache Mechanik und Ansteuerung im Betrieb zu ermöglichen, kann gemäß einer weiteren Ausführungsform ein Manipulationselement nockenartig auf dem Förderband aufgebracht sein, so dass das Manipulationselement gemeinsam mit dem Förderband bewegt wird. Somit wird mit einer Bewegung des Förderbandes auch das Manipulationselement bewegt. An der rechten bzw. linken Uferseite der Auflagefläche wird das Manipulationselement so ohne komplizierte Mechanik und ohne komplizierte Ansteuerung nach unten auf Höhe oder unter die Auflagefläche abtauchen.

Ausführungsformen der Erfindung werden nachfolgend anhand der Figuren beispielsweise näher erläutert. Dabei zeigen:
- Figur 1: eine Fördervorrichtung in Aufsicht und seitlicher Ansicht;
- Figur 2: die Fördervorrichtung von Figur 1 mit eingeklemmtem Stückgut;
- Figur 3: eine weitere Fördervorrichtung mit zwischen den Segmenten angeordneten Manipulationselementen;
- Figur 4: einen Quergurtsorter in Aufsicht.

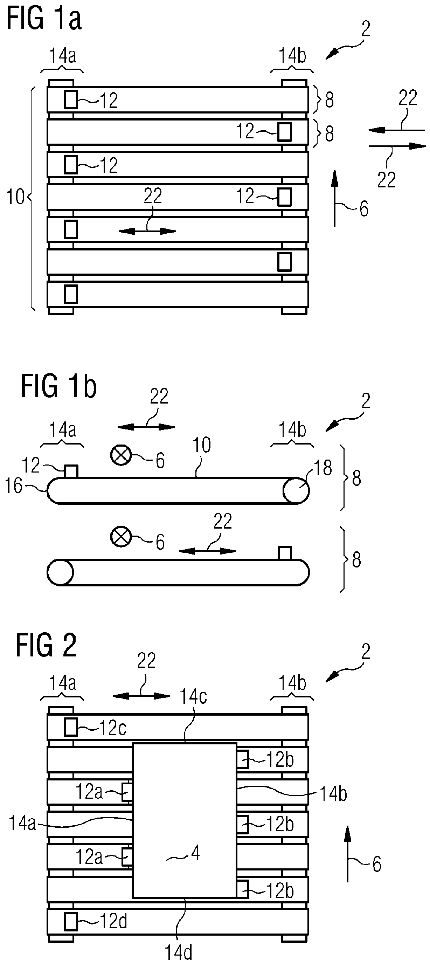

Figur 1 zeigt eine Fördervorrichtung gemäß einer Ausführungsform der Erfindung in Aufsicht (Figur 1a) und als seitlicher Querschnitt durch zwei, in der Darstellung von Figur 1a nebeneinander angeordneten Segmenten 8 (Figur lb).

Die Fördervorrichtung 2 weist eine Flussrichtung 6 auf und umfasst Segmente 8 und fest auf den Segmenten 8 angebrachte Manipulationselemente 12. Die Segmente 8 sind längs entlang der Flussrichtung 6 hintereinander angeordnet und bilden eine Auflagefläche 10 für Stückgüter 4. Die Stückgüter 4 können flussabwärts entlang der Flussrichtung 6 oder von einer Uferseite 14a, 14b her auf die Auflagefläche 10 seitlich mit einer Bewegungskomponente 22 quer zur Flussrichtung 6 aufgebracht bzw. aufgeschossen werden. Eine Aufbringung von oben ist natürlich auch möglich und hat den Vorteil, dass die Manipulationselemente 12 beim Aufbringen nicht extra eingestellt bzw. angesteuert werden müssen, damit sie sich nicht im Aufbringbereich befinden.

Die Segmente 8 und die Manipulationselemente 12 laufen gemeinsam als Carrierkette längs der Flussrichtung 6. Die Segmente 8 weisen quer zur Flussrichtung 6, also entlang der Förderrichtung 22 ansteuerbar antreibbare (hier mit einem Förderbandmotor 18, andere Antriebsmöglichkeiten sind selbstverständlich auch möglich) Förderbänder 16 auf. Die Bewegung eines auf den Segmenten aufliegenden Stückguts 4 ergibt sich als überlagerte Bewegung der Querbewegung, welche eine Bewegungskomponente quer zur Flussrichtung 6 aufweist, und der Längsbewegung entlang der Flussrichtung 6.

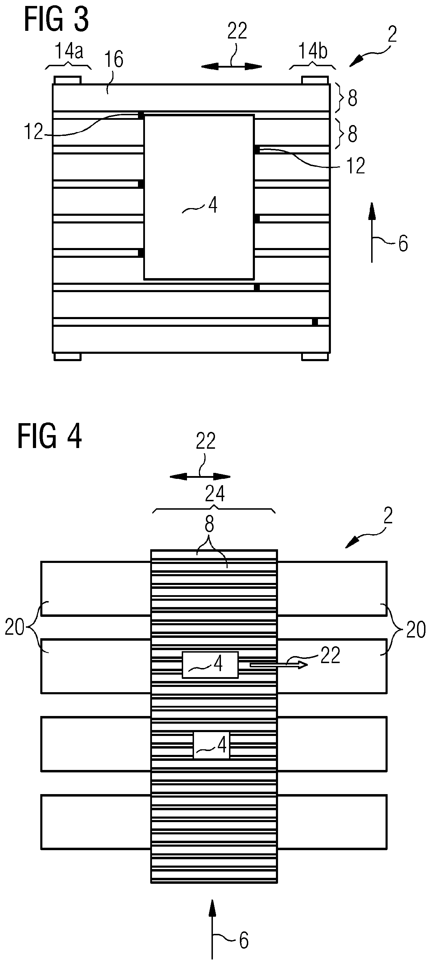

Gemäß einer Ausführungsform umfasst die Fördervorrichtung 2 zudem eine Steuereinrichtung, die adaptiert ist, individuell bewegbare Komponenten (Förderbänder 16 wie in Figur 1 und 2 oder Förderbänder 16 und unabhängig davon die Manipulationselemente 12 wie in Figur 3) der Fördervorrichtung 2 anzusteuern. In Figur 1 und 2 werden nur die Förderbänder 16 angesteuert, da die Manipulationselemente 12 fest auf den Förderbändern 16 aufgebracht sind und daher nur gemeinsam mit diesen bewegt werden können. In der Ausführungsform von Figur 3 können Manipulationselemente 12 und die den Segmenten 8 zugehörigen und von diesen umfassten Förderbänder 16 individuell angesteuert werden.

Ein auf der Auflagefläche 10 aufliegendes Stückgut 4 liegt vorteilhafterweise auf mindestens zwei, besser noch auf drei oder mehr Segmenten 8 auf. Eine Stabilisierung des Stückguts 4 durch die Manipulationselemente 12 kann dann auch von zwei oder mehr Seiten erfolgen. Um das Stückgut 4 während des Transports entlang der Flussrichtung 6 seitlich zu stabilisieren, befinden sich die Manipulationselemente 12 jeweils auf der gegenüberliegenden ersten und zweiten Uferseite 14a, 14b der Auflagefläche 10. Dies verhindert ein unerwünschtes seitliches Abrutschen des transportierten Stückguts 4 von der Förderfläche 10 mit einer Bewegungskomponente quer zur Flussrichtung 6. Handelt es sich um ein kritisches Stückgut, werden gemäß einer Ausführungsform die Manipulationselemente 12 angesteuert und gegeneinander gefahren hin zu dem Stückgut 4, so dass das Stückgut 4 seitlich begrenzt wird und somit eine unerwünschte seitliche Bewegung (z.B. rutschen) quer zur Flussrichtung 6 noch stärker eingeschränkt wird. Die Manipulationselemente 12 können derart positioniert werden, dass sie das Stückgut von zwei oder gar mehr gegenüberliegenden Seiten 14a-14d einklemmen.

Ein Einklemmen von den beiden Uferseiten 14a, 14b durch die Manipulationselemente 12a, 12b ist in Figur 2 gezeigt. Es können auch noch zusätzlich die entlang der Flussrichtung 6 vor bzw. hinter dem Stückgut 4 angeordneten Manipulationselemente 12c, 12d derart angesteuert und quer zur Flussrichtung 6 bewegt werden, dass sie mittig vor und/oder hinter das Stückgut 4 positioniert dieses zusätzlich von der Seite 14c (flussaufwärts) und/oder von der Seite 14d (flussabwärts) stabilisieren. Diese Anordnung der Manipulationselemente 12a, 12b, 12c, 12d kann aus Figur 2 leicht hergeleitet werden. Wenn ein Stückgut 4 auf der Auflagefläche unerwünscht entlang oder gegen der Flussrichtung 6 rutscht (zusätzlich zu der erwünschten Bewegung der Carrierkette umfassend Manipulationselemente 12 und Segmente 8), ist auch eine Begrenzung dieser unerwünschten, überlagerten Bewegungskomponente entlang bzw. entgegen der Flussrichtung 22 erwünscht durch Positionierung der flussaufwärts bzw. flussabwärts zum Stückgut 4 liegenden Manipulationselemente 12c, 12d möglich. Ein unkontrollierte Bewegung entlang oder gegen der Flussrichtung 6 führt zwar bei gerade Förderstrecke (bei Kurven schon) nicht zu einem Herunterfallen des Stückguts 4 von der Auflagefläche 10, allerdings vereitelt die unkontrollierte Bewegung entlang oder gegen der Flussrichtung 6 korrektes Tracking, wenn das Tracking berechnet wird basierend auf der Laufgeschwindigkeit der Segmente 8 und Manipulationselemente 12 entlang der Flussrichtung 6.

Das (seitliche) Begrenzen bzw. Einsperren des Stückguts 4, um unerwünschte laterale Bewegungen während des Transports entlang der Flussrichtung 6 zu begrenzen oder komplett zu verhindern kann, muss aber nicht gemacht werden. Es ist auch möglich, durch die Positionierung der Manipulationselemente 12 nur ein Herunterfallen des Stückguts 4 von der Auflagefläche zu verhindern.

Figur 4 zeigt eine als Quergurtsorter 2 ausgestaltete Fördervorrichtung 2 gemäß einer Ausführungsform der Erfindung. Die Manipulationselemente 12 sind in Figur 4 der Übersichtlichkeit zuliebe nicht dargestellt. Sie können jeweils von dem Segmenten 8 umfasst sein, so dass die Segmente im Wesentlichen ohne Zwischenräume angeordnet werden (in der Art von Figur 1 und 2). Oder die Manipulationselemente 12 sind jeweils - in der Art von Figur 3 - zwischen zwei Segmenten 8 angeordnet.

Gemäß einer Ausführungsform werden auf der Quergurtträger umfassenden Fördervorrichtung 2 schmale Gurte 16 mit eigenem Antrieb nebeneinander montiert. Jeder Gurt 16 weist eine fest aufgebrachte Nocke 12 als Manipulationselement 12 auf. Wenn der Quergurt 16 individuell angesteuert angetrieben wird, wird also auch die Nocke 12 gleichzeitig mitbewegt. Voneinander unabhängig bewegbar sind die Nocke 12 und das Förderband 16 also nicht. Der Gurt 16 kann komplett umlaufen. Wenn also der Gurt auf der rechten Uferseite 14b neben der Nocke 12 liegt und ein auf dem entsprechenden Segment 8 aufliegendes Stückgut 4 auf die linke Uferseite 14a seitlich abgeworfen werden soll, so wird der Gurt 16 mit einer Bewegungskomponente quer zur Flussrichtung 6 angetrieben, die Nocke 12 wird nach links hin zur linken Uferseite 14a bewegt und am Ende des Bandkörpers 16 taucht die Nocke 12 nach unten ab, so dass das Stückgut 4 ungehindert seitlich abgeworfen werden kann.

Auf ähnliche Weise kann gemäß einer weiteren Ausführungsform beim seitlichen Aufschuss eines Stückguts 4 verfahren werden: während des Aufschusses ist der Gurt so positioniert, dass die Nocke 12 knapp vor der Kante des zu übernehmenden Stückguts 4 liegt. Ist das Stückgut 4 übernommen, taucht die Nocke 12 hinter dem Stückgut 4 zwischen der entsprechenden Uferseite 14a bzw. 14b (je nachdem, ob der Aufschuss von links oder rechts erfolgt) wieder oberhalb der Auflagefläche 10 auf. Die Nocke 12 agiert als Manipulationselement 12.

Vorteilhafterweise liegt das Stückgut 4 auf drei oder vier Segmenten 8 auf und kann somit auch von drei oder mehr Nocken 12 seitlich in seiner Bewegung eingeschränkt werden.

Gemäß einer weiteren Ausführungsform sind die Manipulationselemente 12 nicht regelmäßig auf den Förderbändern 16 aufgebracht, sondern liegen zusätzlich regelmäßig neben den bzw. jeweils zwischen zwei eigentlichen Förderbändern 16. Auf diese Weise ist der Quertransport des Stückguts 4 und das seitliche Begrenzen durch die Manipulationselemente 12 voneinander entkoppelt.

Gemäß einer weiteren Ausführungsform ist die Fördervorrichtung 2 als Schuhsorter 2 ausgestaltet. Dann befinden sich auf beiden Uferseiten 14a, 14b der Auflagefläche jeweils Schuhe 12 als Manipulationselemente 12. Die Schuhe 12 sind zwischen den Segmenten 8 in der Art von Figur 3 angeordnet. Diejenigen Schuhe 12, die sich auf der Abwurfseite befinden, müssen währen des seitlichen Abwurfs auf Höhe oder unterhalb der Auflagefläche 10 abtauchen und somit den Abschiebeweg soweit freigeben, dass das Stückgut 4 in seiner seitlichen Bewegung nicht behindert wird.

Gemäß einer weiteren Ausführungsform werden in der Art von Figur 3 die Manipulationselemente 12 auf zwischen den Segmenten 8 angeordneten Zwischengurten aufgebracht. Die Zwischengurte werden unabhängig von den Segmenten 8 umfassten Förderbändern 16 angesteuert. Bei einer solchen Ausführungsform können die zwischen den Segmenten 8 angeordneten Manipulationselemente 12 auch anders als mit einem Zwischengurt mechanisch bewegt werden. Wenn die Auflagefläche 10 nur von den Segmenten 8 ausgebildet werden soll, müssen die Zwischengurte leicht unterhalb der Auflagefläche 10 angeordnet sein, damit eine Bewegung der Zwischengurte die Position des Stückguts 4 nicht beeinflusst. Andernfalls können auch die Zwischengurte von der Auflagefläche 10 umfasst sein.

Gemäß einer weiteren Ausführungsform werden die Zwischengurte und damit ein aktives Einfangen bzw. Einklemmen kritischer Stückgüter 4 weggelassen. Die Manipulationselemente 12 werden dann nur im Außenbereich 14a, 14b der Quergurte 16 von unten auftauchen und wieder abtauchen. So wird ein seitliches Herunterfallen von der Auflagefläche 10 durch unerwünschte

Gemäß einer Ausführungsform umfasst eine Fördervorrichtung 2 Segmente 8 und nockenartige Manipulationselemente 12, auch als Nocken 12 bezeichnet. Die Segmente 8 sind entlang einer Flussrichtung 6 hintereinander aufeinanderfolgend angeordnet. Die Segmente 8 und die Manipulationselemente 12 laufen gemeinsam entlang der Flussrichtung 6. Die Segmente 8 umfassen quer zur Flussrichtung 6 individuell ansteuerbare Förderbänder 16. Die Oberfläche der Förderbänder 16 bildet eine Auflagefläche 10 für ein Stückgut 4 aus. Durch das laufen der Segmente 8 wird das auf ihnen aufliegende Stückgut 4 entlang der Flussrichtung 6 transportiert. Auf jedem Förderband 16 ist je ein Manipulationselement 12 aufgebracht, so dass ein Antreiben eines Förderbands 16 auch das auf ihm angebrachte Manipulationselement 12 bewegt. Das Manipulationselement kann so überall auf der dem Segment 8 positioniert werden - sowohl auf als auch unterhalb einer Höhe der Auflagefläche 10. Um ein Manipulationselement 12 unterhalb der Auflagefläche 10 zu positionieren, wird das ihm zugehörige Förderband 16 einfach nach rechts bzw. links gefahren, bis das Manipulationselement 12 unter die Auflagefläche 10 abtaucht. Hierbei wird aber auch ein auf diesem Förderband 16 aufliegendes Stückgut 4 mitbewegt. Daher kann auch ein weiter oben im Text beschriebenes, individuelles, voneinander entkoppeltes Ansteuern von Manipulationselementen 12 und Förderbändern 16 bzw. Segmenten 8 trotz komplizierterer Mechanik und Ansteuerung sinnvoll sein - hierbei können die Manipulationselemente 12 auf oder zwischen den Segmenten 8 angeordnet werden. Wenn ein Stückgut 4 auf mehr als einem Förderband 16 aufliegt, kann durch abgestimmtes gegenläufiges Ansteuern hintereinander angeordneter Förderbänder 16 hintereinander angeordneter Segmente 8 (jedes Förderband 16 wird von einem Segment 8 umfasst) eine seitliche Bewegung des Stückguts 4 nach rechts bzw. links weitestgehend vermieden werden.

Um bei dieser Ausführungsform ein Stückgut 4 seitlich zu stabilisieren, werden die zunächst rechts bzw. links von dem Stückgut 4 befindlichen Manipulationselemente 12 durch Bewegung nach links bzw. rechts hin zu dem Stückgut 4 bewegt. Auf diese Weise wird das Stückgut 4 von rechts und links eingeklemmt. Zudem können auch die vor und hinter dem Stückgut 4 angeordneten Manipulationselemente mittig vor bzw. hinter dem Stückgut 4 positioniert werden. Da die Manipulationselemente 12 gemeinsam mit dem Segmenten 8 entlang der Flussrichtung 6 laufen, kann die Stabilisierung des Stückguts 4 während seines Transports entlang der Flussrichtung ohne weiteres aufrechterhalten werden.

Um das Stückgut 4 seitlich auf die rechte Seite 14b hin zu einer Endstelle 20 hin abzuwerfen, werden alle Förderbänder 16, auf denen das Stückgut 4 aufliegt, mit einer Förderrichtung nach rechts angesteuert. Das Stückgut 4 wird dann von den Förderbändern 16 und seitlich angeschoben von den links von ihm liegenden Manipulationselementen 12 hin zu der Endstelle 20 nach rechts befördert. Analog wird bei einem seitlichen Abwurf auf die linke Seite 14a verfahren.

Die Bewegung des Stückguts 4 entlang seiner Abwurfrichtung 22 setzt sich zusammen aus den Bewegungskomponenten des Stückguts 4 quer zur Flussrichtung 6 und entlang der Flussrichtung 6, wobei die Bewegungskomponente entlang der Flussrichtung 6 bewirkt wird durch das Laufen der Segmente 8 und der Manipulationselemente 12 entlang der Flussrichtung 6. Je nach Ausgestaltung der Endstelle 20 wird die Abwurfrichtung 22 übernommen oder direkt weiter beeinflusst.

Für ein erfolgreiches seitliches Aufschießen auf die Auflagefläche 10 werden die Manipulationselemente 12 außerhalb des Aufschussbereichs positioniert. Dies geschieht durch Absenken der Manipulationselemente 12 unterhalb der Förderfläche 10 auf der Aufschussseite oder durch Positionierung der Manipulationselemente auf der der Aufschussseite gegenüberliegende Uferseite 14a oder 14b, wobei nach einem erfolgreichen Aufschießen die Manipulationselemente 12 wieder zum Stabilisieren des Stückguts 4 positioniert werden. Um die Seite (rechts oder links vom Stückgut 4) zu ändern, kann das Manipulationselement 12, welches repositioniert werden soll, auch unterhalb der Auflagefläche 10 unter dem Stückgut hindurch auf die andere Uferseite 14a, 14b bewegt werden.

### Bezugszeichenliste

- 2: Fördervorrichtung
- 4: Stückgut
- 6: Flussrichtung
- 8: Segment
- 10: Auflagefläche
- 12: Manipulationselement
- 14: Seite des Stückguts und des Hauptförderflusses
- 16: Förderband
- 18: Förderbandmotor
- 20: Endstelle
- 22: Abwurfrichtung, Bewegungskomponente quer zur Flussrichtung 6
- 24: Hauptförderstrecke

## Patentansprüche

1. Fördervorrichtung (2) für Stückgüter (4) umfassend
a) längs einer Flussrichtung (6) laufende Segmente (8), wobei die Segmente (8) entlang der Flussrichtung (6) aufeinanderfolgend angeordnet sind und eine Auflagefläche (10) für die Stückgüter (4) ausbilden;
b) entlang der Flussrichtung (6) mit den Segmenten (8) laufende Manipulationselemente (12), wobei die Manipulationselemente (12) mit einer Bewegungskomponente quer zur Flussrichtung (6) ansteuerbar bewegbar sind;
c) eine Steuereinrichtung, die adaptiert ist, die Manipulationselemente (12) so anzusteuern, dass das auf der Auflagefläche (10) aufliegende Stückgut (4) während seines Transports entlang der Flussrichtung (6) seitlich stabilisiert wird.

2. Fördervorrichtung (2) nach Anspruch 1, **dadurch gekennzeichnet, dass**
die Manipulationselemente (12) mit einer Bewegungskomponente quer zur Flussrichtung (6) hin- und her ansteuerbar bewegbar und absenkbar sind auf Höhe der und/oder unter die Auflagefläche (10).

3. Fördervorrichtung (2) nach einem der Ansprüche 1 bis 2, **dadurch gekennzeichnet, dass**
die Steuereinrichtung adaptiert ist, die Manipulationselemente (12) so anzusteuern, dass das Stückgut (4) während seines Transports entlang der Flussrichtung (6) seitlich stabilisiert wird, indem die Manipulationselemente (12) das auf der Auflagefläche (10) aufliegende Stückgut (4) reversibel mindestens von einer Seite (14) stützen oder von einer ersten und zweiten Seite (14) eingrenzen, insbesondere einklemmen, so dass eine unerwünschte Bewegung des Stückguts (4) quer zur und/oder entlang der Flussrichtung (6) verhindert wird.

4. Fördervorrichtung (2) nach einem der Ansprüche 1 bis 3, **dadurch gekennzeichnet, dass**
ein Manipulationselement (12) jeweils zwischen zwei Segmenten (8) und/oder jeweils auf einem Segment (8) angeordnet ist.

5. Fördervorrichtung (2) nach einem der Ansprüche 1 bis 4, zudem umfassend
ein mit einer Bewegungskomponente quer zur Flussrichtung (6) ansteuerbares Förderband (16), wobei das Förderband (16) von einem Segment umfasst ist und/oder zwischen zwei Segmenten (8) angeordnet ist.

6. Fördervorrichtung (2) nach Anspruch 5, **dadurch gekennzeichnet, dass**
ein Manipulationselement (12) nockenartig auf dem Förderband (16) angebracht ist, so dass eine Bewegung des Förderbandes (16) eine Bewegung des Manipulationselements (12) bewirkt.

7. Fördervorrichtung (2) nach einem der Ansprüche 1 bis 6, **dadurch gekennzeichnet, dass**
die Fördervorrichtung (2) eine ansteuerbare Abwurfvorrichtung umfasst, die ausgestaltet ist, ein auf der Auflagefläche aufliegendes Stückgut (4) mit einer Bewegungskomponente quer zur Flussrichtung (6) seitlich abzuwerfen.

8. Fördervorrichtung (2) nach Anspruch 7, **dadurch gekennzeichnet, dass**
ein oder mehrere Förderbänder und/oder ein oder mehrere Manipulationselemente (12) ausgestaltet sind als Abwurfvorrichtung zu agieren.

9. Verfahren zum Fördern eines Stückguts (4) auf einer Fördervorrichtung (2), wobei die Fördervorrichtung (2) Segmente (8) und Manipulationselemente (12) umfasst, die beide gemeinsam längs einer Flussrichtung (6) laufen, umfassend die Verfahrensschritte
a) Transport des Stückguts (4) entlang der Flussrichtung (6), wobei das Stückgut (4) aufliegt auf einer Auflagefläche (10), die von längs der Flussrichtung (6) laufenden Segmenten (8) ausgebildet wird;
b) individuelles Ansteuern der Manipulationselemente (12) mit einer Bewegungskomponente quer zur Flussrichtung (6) hin zu und/oder weg von dem Stückgut (4), so dass das Stückgut (4) während seines Transports entlang der Flussrichtung (6) seitlich stabilisiert wird und/oder eine Bewegung des Stückguts (4) mit einer Bewegungskomponente quer zur Flussrichtung (6) nicht verhindert wird.

10. Verfahren nach Anspruch 9, zudem umfassend den Verfahrensschritt
ansteuerbares Bewegen der Manipulationselemente (12) mit einer Bewegungskomponente quer zur Flussrichtung (6) und/oder Absenken von mindestens einem Manipulationselement (12) auf Höhe der und/oder unter die Auflagefläche (10).

11. Verfahren nach einem der Ansprüche 9 bis 10, **dadurch gekennzeichnet, dass**
das Stückgut (4) seitlich stabilisiert wird, indem die Manipulationselemente (12) das auf der Auflagefläche (10) aufliegende Stückgut (4) mindestens von einer Seite (14) stützen oder von einer ersten und zweiten Seite (14) eingrenzen, insbesondere einklemmen, so dass eine unerwünschte Bewegung des Stückguts (4) quer zur und/oder entlang der Flussrichtung (6) verhindert wird.

12. Verfahren nach einem der Ansprüche 9 bis 11, **dadurch gekennzeichnet, dass**
die Manipulationselemente (12) jeweils zwischen zwei Segmenten (8) angeordnet sind und/oder von einem Segment (8) umfasst sind.

13. Verfahren nach einem der Ansprüche 9 bis 12, zudem umfassend den Verfahrensschritt
seitliches Abwerfen des Stückguts (4) mit einer Bewegungskomponente quer zur Flussrichtung (6).

14. Verfahren nach Anspruch 13, **gekennzeichnet durch** Bewegen eines oder mehrerer Förderbänder und/oder eines oder mehrerer Manipulationselemente (12) mit einer Bewegungskomponente quer zur Flussrichtung (6) um das seitliche Abwerfen des Stückguts (4) zu erzielen, wobei das eine oder die mehreren Förderbänder von einem Segment (8) umfasst sind und/oder zwischen zwei Segmenten (8) angeordnet sind.

15. Verfahren nach Anspruch 14, **dadurch gekennzeichnet, dass** ein Manipulationselement (12) nockenartig auf dem Förderband (16) aufgebracht ist, so dass das Manipulationselement (12) gemeinsam mit dem Förderband (16) bewegt wird.
